# EUROPEAN PATENT APPLICATION

(11) **EP 0 981 248 A2**
(43) Date of publication of application: **23.02.2000**
(21) Application number: 99115120.0
(22) Date of filing: 10.08.1999
(51) Int. Cl.: H04N 7/173

(54) **Image information applying method and apparatus and recording medium**

(30) Priority: 18.08.1998 JP 23151398
(71) Applicant: Knowledge Modeling Institute Inc., Nakano-ku, Tokyo (JP)
(72) Inventor: Matsuzuki, Tadao, Suginami-ku, Tokyo (JP)
(74) Representative: Reinhard - Skuhra - Weise & Partner

(57) **Abstract**

This invention provides a picture information applying method and apparatus for causing a recording medium to be used for another application and a recording medium used therefor. For this purpose, picture data (102) is recorded on a recording medium (100) and associated information (P11) containing at least a to-be-connected destination and merchandise guidance for a merchandise appearing in a video image (P1) displayed based on the picture data is recorded, and when a recording signal of the recording medium is played back, the corresponding merchandise guidance can be observed based on the associated information and it is made possible to make contact with the destination associated with the corresponding merchandise based on the associated information.

## Description

This invention relates to a picture information applying method and apparatus capable of effectively applying picture information recorded on a recording medium such as an optical disk or magnetic disk, and a recording medium used therefor.

There is provided a system for causing video information to be recorded on an optical disk and permitting the user to enjoy Karaoke songs. Further, there is provided a CD-ROM as an information providing medium. However, most of the conventional recording media of this type are used to supply pictures, voices or information in one direction from the recording media to the users. Therefore, it is difficult for the manufacturer of the recording media to obtain the reactions of the users form various fields after the recording media were sold.

According to the system of the conventional recording media, it is difficult for the manufacturer of the recording media to obtain the reactions of the users after the recording media were sold and it is required to separately conduct the questionnaire in order to obtain information used for making next software.

An object of this invention is to provide a picture information applying method and apparatus capable of causing a recording medium to be used in another application, and a recording medium used theretor.

In order to attain the above object, this invention is made to record picture data on a recording medium and record associated information containing at least a to-be-connected destination and merchandise guidance for a merchandise appearing in a video image displayed based on the picture data so as to make it possible to observe the corresponding merchandise guidance based on the associated information and make contact with the destination associated with the corresponding merchandise based on the associated information when a recording signal of the recording medium is played back.

It becomes possible to effectively use the picture information recorded on the recording medium by use of the above means and the manufacturer of the recording media can collect reaction information of the users based on the picture information.

Further, the manufacturer of the recording media can collect funds by using merchandise suppliers (clothes, devices and the like) as sponsors when the manufacturer makes a film or the like.

This summary of the invention does not necessarily describe all necessary features so that the invention may also be a sub-combination of these described features.

The invention can be more fully understood from the following detailed description when taken in conjunction with the accompanying drawings, in which:
FIGS. 1A, 1B are views showing the outer appearance of a disk playback apparatus to which this invention is applied and a display;
FIG. 2 is a diagram showing field pictures or frame pictures shown in a simplified form for illustrating the function in one embodiment of this invention;
FIG. 3 is a view showing an example of a state in which the apparatus of this invention is used;
FIGS. 4A, 4B are views showing examples of the window when the apparatus of this invention is used;
FIG. 5 is a diagram showing an example of a data recording area of a disk to which this invention is applied;
FIG. 6 is a flowchart for illustrating an example of the operation of a system according to this invention;
FIG. 7 is a flowchart for illustrating an example of the operation of a system according to this invention;
FIG. 8 is a view showing the outer appearance of an apparatus according to this invention;
FIG. 9 is a flowchart for illustrating an example of the operation of the apparatus shown in FIG. 8;
FIG. 10 is a flowchart for illustrating an example of the operation of the apparatus shown in FIG. 8;
FIG. 11 is a flowchart for illustrating another example of the operation of the apparatus shown in FIG. 8;
FIG. 12 is a diagram showing an additional function of an apparatus according to this invention;
FIGS. 13A, 13B are views showing examples of a display window for illustrating examples of the operation of the apparatus of FIG. 12;
FIG. 14 is a view for illustrating the operation of a business logic applying section of FIG. 12; and
FIG. 15 is a view showing an example of the window for illustrating an example of the operation of the apparatus of FIG. 12.

There will now be described an embodiment of this invention with reference to the accompanying drawings.

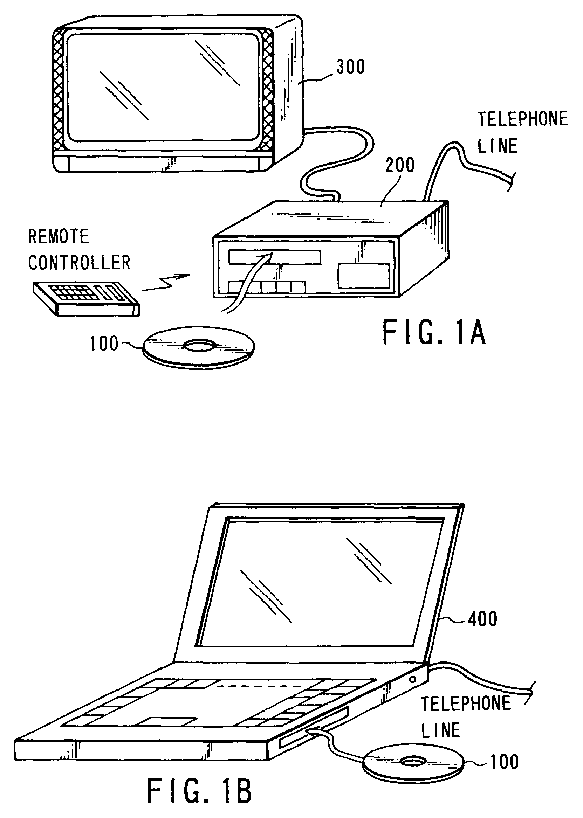

FIGS. 1A, 1B are views showing the outer appearance of a disk playback apparatus to which this invention is applied. In FIG. 1A, a reference numeral 100 denotes an optical disk. As the optical disk, a digital video disk (DVD) which is recently developed, a read-only compact disk (CD-ROM) or the like is used. On the optical disk, picture data of moving pictures of a film or the like is recorded in a compressed form and associated information containing at least a to-be-connected destination and merchandise guidance for a merchandise appearing in a video image as will be described later is recorded.

A reference numeral 200 denotes a disk playback apparatus and a video signal obtained by the disk playback apparatus 200 is supplied to and displayed on a display 300 such as a television receiver. An operation input can be entered by use of a remote control system.

FIG. 1B shows the outer appearance of a personal computer 400 used for playing back the optical disk 100.

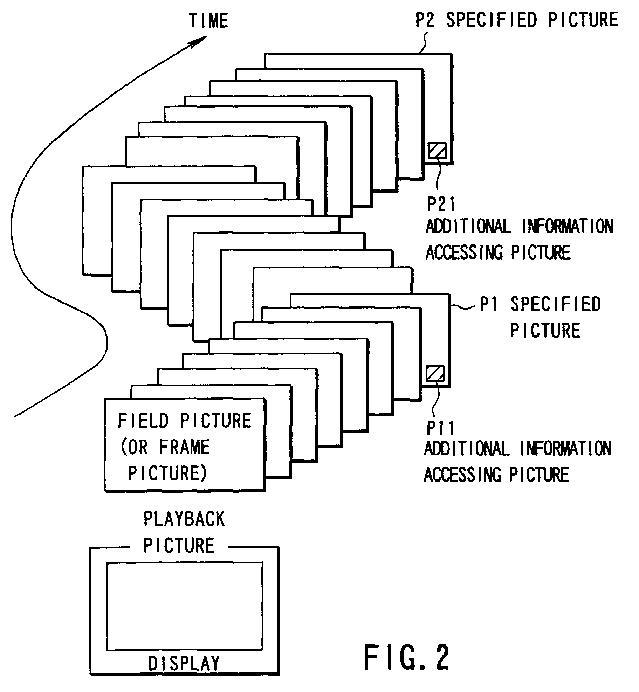

FIG. 2 shows a state in which video data recorded on the optical disk 100 is decoded and pictures are displayed in the unit of field (or in the unit of frame). In FIG. 2, fields are arranged on the time base. In the playback picture of the optical disk, additional information accessing pictures P11, P12 are inserted into parts of the pictures of the fields which lie in the intermediate positions thereof. The pictures in which the additional information accessing pictures P11, P12 are inserted are respectively referred to as specified pictures P1, P2.

The additional information accessing pictures P11, P12 are each inserted into a field which is so short period that it does not remain in the eyes of the viewer when the film is normally continuously played back. Therefore, in FIG. 2, the additional information accessing picture P11 is inserted into one specified picture P1, but the additional information accessing picture P11 of the same contents can be inserted into frame pictures before and after the specified picture.

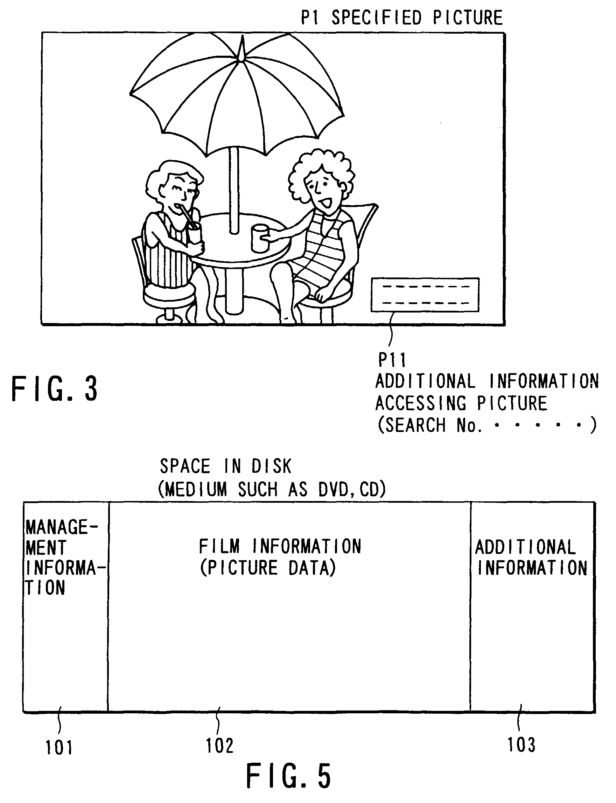

FIG. 3 shows an example in which the specified picture P1 is played back in a still form, for example. Since the additional information accessing picture P11 is inserted into the specified picture P1, the viewer can observe the additional information accessing picture P11. The additional information accessing picture P11 is part of the associated information containing at least a to-be-connected destination and merchandise guidance for a merchandise appearing in the video image.

In the additional information accessing picture P11, for example, a search number for permitting the viewer to access a specified position of the optical disk 100 is displayed.

In this case, if the viewer is interested in a merchandise (in the example shown in FIG. 3, a table, chair, shirt which the performer wears, parasol or the like) now appearing in the video image, he specifies the search number by use of the remote control system or ten-key pad. Then, the playback apparatus or personal computer reads out and displays address data corresponding to the search number on the optical disk 100.

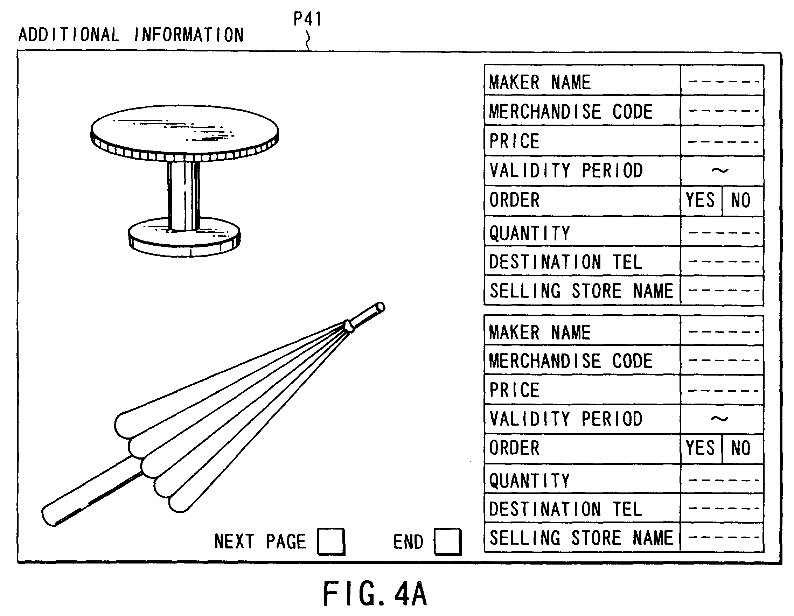

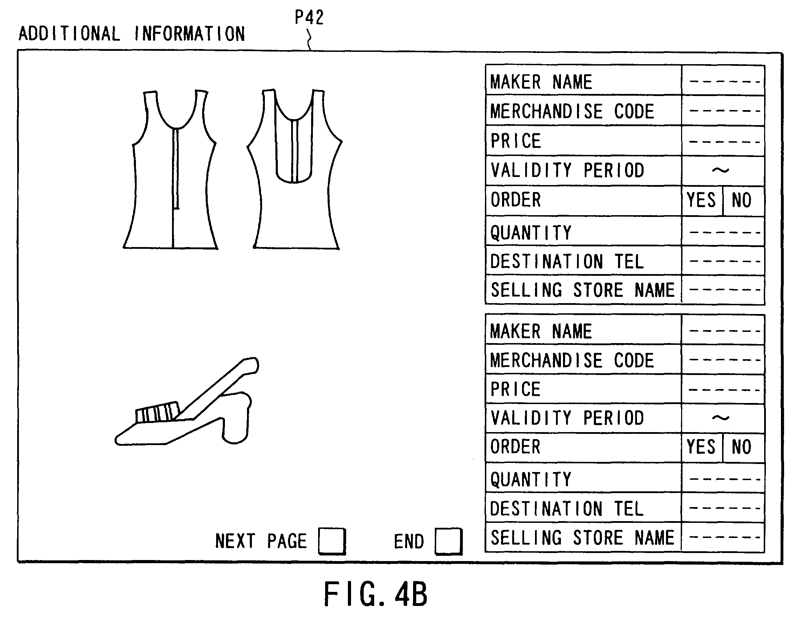

FIGS. 4A, 4B show examples of the window read out and displayed according to the search number and the display contents thereof (additional information items P41, P42). On the window of the additional information P41, the table and parasol which appeared in the previous video image contents are displayed and various items such as the maker's name, merchandise code, price, validity period, "YES" or "NO" of the order, the quantity of merchandises ordered, the telephone number of the destination, the store's name and the like are displayed as video images beside the corresponding merchandise. If the viewer clicks the item of a next page by use of a cursor or by the keyboard operation, a window of the additional information P42 appears, the shirt and shoes which appeared in the previous video image contents are displayed and various items such as the maker's name, merchandise code, price, validity period, "YES" or "NO" of the order, the quantity of merchandises ordered, the telephone number of the destination, the store's name and the like are displayed as video images beside the corresponding merchandise.

At this time, when a merchandise which the viewer wants to obtain is present, an order can be automatically given to the selling agency if the viewer clicks "YES" of the item of the order by use of a cursor or by the keyboard operation.

As described above, in the system, picture data is recorded on the recording medium and associated information containing at least a to-be-connected destination and merchandise guidance for a merchandise appearing in a video image displayed based on the picture data is recorded, and the viewer is permitted to observe the corresponding merchandise guidance based on the associated information and make contact with the destination associated with the corresponding merchandise based on the associated information when a recording signal of the recording medium is played back.

As a result, the viewer can not only see the film recorded on the optical disk but also variously use a thing which a person appearing on the film uses or a wear which a person appearing on the film wears as merchandise information.

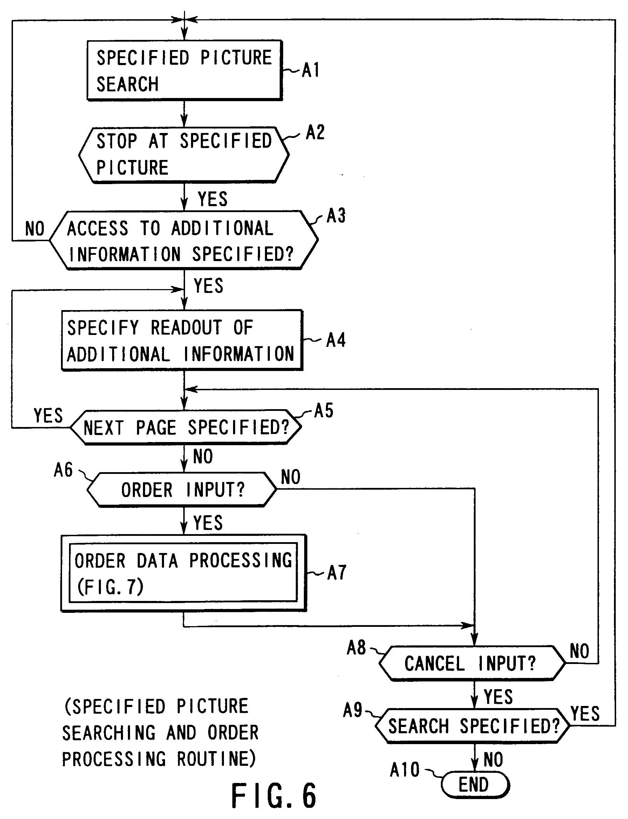

In FIG. 5, a data recording area of the optical disk 100 is shown in a brief form. In the optical disk 100, a management information area 101 and a data area 102 in which compressed picture data such as a film is recorded are provided. Further, in the optical disk 100, as explained with reference to FIG. 2, an additional information accessing picture (first associated information) attached to the picture in the data area and additional information (second associated information) shown in FIG. 4 are provided in an additional information area 103.

As management information of the management information area 101, attribute information items such as the title of picture contents of video data, recording position, compression method and the like are described. Particularly, a specified picture address used for searching for a specified picture is also recorded as a table in the management information.

FIG. 6 is an operation flowchart in the playback apparatus when the viewer searches for specified pictures P1, P2 after the viewer played back the optical disk 100 and saw the film. That is, the operation explained below is an operation of associated information processing means. The associated information processing means is constructed by software of an overall management section (system control section) or microprocessor in the disk playback apparatus or personal computer. The software may be previously recorded on the optical disk and transferred so as to construct part of the overall management section in the personal computer.

If a specified picture search mode is set, the playback apparatus moves the pickup to read out a specified picture address previously described in management information (FIG. 5) and further moves the pickup based on the readout address to read out picture data of the specified picture P1. Then, the picture data is decoded and the still playback mode is set (steps A1, A2). In this state, the standby state is set until the viewer issues an instruction for additional information access or an instruction for next specified picture search (step A3). If the instruction for next specified picture search is issued, the step A1 is effected again to search for a next specified picture P2. Further, if the instruction for additional information access is issued, additional information of an address corresponding to a search number specified at this time is read out and displayed as shown in FIG. 4 (step A4). The instruction for additional information access is issued by operating the remote control unit by the user, for example.

Next, whether the order for merchandise is input or not is determined (step A6) and if the order is placed, an order data process is effected (step A7). The contents of the order data process are explained in detail later. If the order for merchandise is not placed, that is, if "NO" in the item of FIG. 4 is clicked, whether a cancel input is made or not is determined (step A8). If no cancellation is made, whether an instruction for displaying additional information of the next page is issued or not is determined (step A5). If a cancel input is made, whether the instruction for searching for a next specified picture is issued or not is determined (step A9), and if the searching instruction is issued, the step A1 is effected again, and if the searching instruction is not issued, the process is terminated (step A10). The order input, cancel input, searching instruction or the like can be issued by operating the remote control unit by the user, for example.

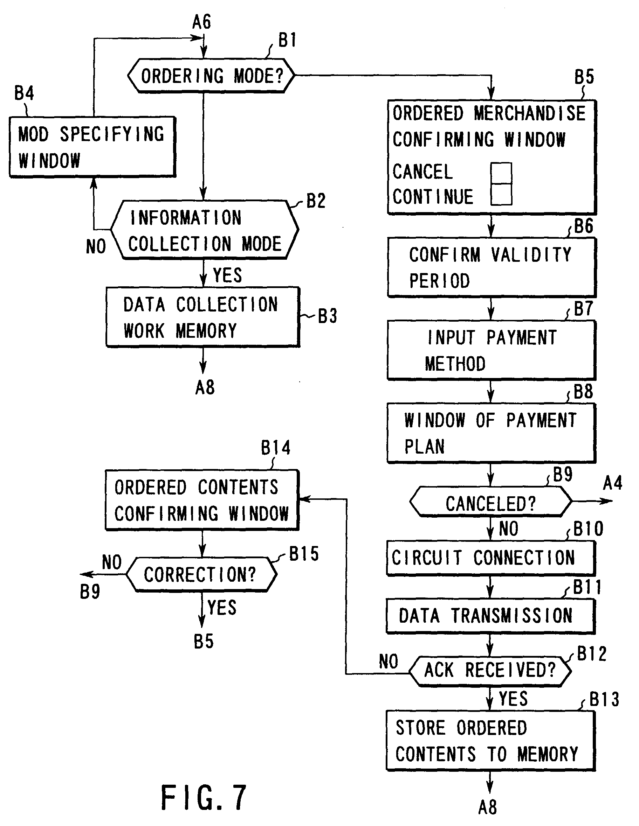

FIG. 7 is a flowchart showing the contents of the data processing step A7 of FIG. 6 more in detail.

In this system, the user can select the operation for ordering a selected merchandise to the selling agency or the operation for simply collecting information associated with the merchandise. Therefore, if the "order (YES)" is pointed in the step A6 of FIG. 6, the selection item of "ordering" or "information collection" appears on the window. The selection item is displayed in a flushing manner. At this time, if the user selects the item of information collection, a data storage process associated with a selected merchandise is effected after effecting the steps B1, B2 (step B3). The stored data can be used when the merchandise is analyzed later. The analysis of the merchandise includes a process for comparing the prices, for example.

If an ordering mode is specified, the ordered merchandise is displayed more in detail and the merchandise can be confirmed (step B5). Next, the validity period is confined (step B6) and if the validity period has already elapsed, the warning display is made and the step A4 is effected again. If it is within the validity period, the total amount corresponding to the specified quantity of merchandises and the unit price of the merchandise is displayed and a window for inquiry about the payment method is displayed (step B7). Determination of the validity period is made by comparing validity period information with timer information which the apparatus has.

The payment method is a method of lamp-sum payment, monthly payment, payment by credit card, or payment by cash transfer. Further, at this time, it is possible to input correction for the quantity of merchandises and the like.

If the monthly payment is specified, the payment plan table is displayed and the payment amount for each month and the payment date are displayed (step B8). In this case, the user can cancel the order by taking his payment ability into consideration (step B9).

If the order of the merchandise is not cancelled, the circuit is connected (step B10) and data is transferred (step B11). The circuit connection is made via the public communication line by automatically using a telephone number of the selling store associated with the ordered merchandise. That is, the apparatus has a function of transferring data associated with the ordered merchandise via a transmission line based on the destination information.

In the selling store, data (merchandise code, identification code of the orderer and the like) is received, the orderer and the ordered merchandise are confirmed and a response signal is returned. If it is determined that the response data is sent back, the contents of the order are stored into a memory. At this time, the payment plan data is stored into the memory in correspondence to the ordered merchandise code (steps B12, B13).

If it is determined in the step B12 that no response is made even after a preset period of time has elapsed, warning display is made and a confirmation picture for the contents of the order is displayed (step B14). In this case, the user can confirm whether the ordering method is correct or not. If correction is necessary, the step B5 is effected again and if no correction is made, the step B9 is effected again.

In the above explanation, an address of the specified picture is described in the management information when the specified picture of FIG. 2 is searched for. Further, additional information accessing picture is superposed on the specified picture. However, this invention is not limited to this case, and if a caption of a film is superposed in the DVD, language streams of a plurality of countries are prepared and any one of the streams can be selected. A concrete merchandise ordering mode can be set by using one of the streams as a stream for guidance of the merchandise, playing back a still picture on a desired window and referring to merchandise guidance information superposed on the window.

Further, in the above explanation, a method for searching for the specified picture and reading out merchandise guidance information while the specified picture is played back in a still form and the user sees the additional information accessing picture is explained. However, this invention is not limited to this case, and it is possible to automatically read out merchandise guidance information if the user operates the merchandise guidance information key at a desired timing by use of the remote control unit in a moving picture outputting state. That is, in this case, if a merchandise guidance information request command is issued from the remote control system when the contents of a video image of the moving picture are set in the state as shown in FIG. 3, for example, corresponding merchandise guidance information is searched for and displayed. In order to realize this, for example, control information for receiving the merchandise guidance information request command issued from the remote control system may be used together with synchronization information or timer information for playing back a video image when the video image playback timing as shown in FIG. 3 is used.

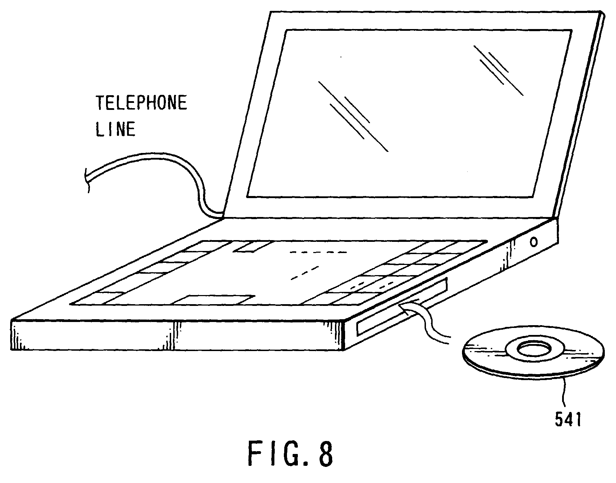

FIG. 8 shows the outer appearance of a receiving device of the selling store for processing data transferred from the above system.

The receiving device is a personal computer 450 having a modem. If merchandise ordering data is received, the identification data of the orderer is confirmed and the ordered merchandise, the quantity of merchandises and the unit price of the merchandise are confirmed. The personal computer 450 can read out data from a optical disk 451.

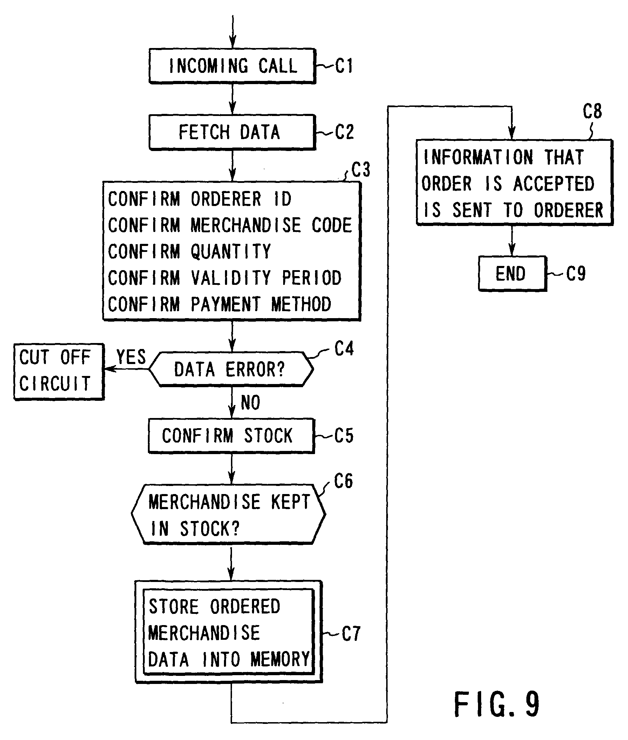

FIG. 9 is a flowchart for illustrating the operation of the receiving device. If a telephone call for ordering the merchandise from the user side is made, incoming connection is made on the receiver side to fetch data (steps C1, C2). When data fetching is terminated, the ID (identification code) of the orderer, merchandise code, the quantity of merchandises, validity period, payment method and the like are confirmed. In this case, if a data error is present, the circuit is cut off (steps C3, C4). If no error is present, access to a stock control file is made and the confirmation process for the stock of the merchandise is effected (step C5). If the merchandise is kept in stock, the order-received merchandise information is stored into an order-received merchandise memory. Further, at this time, information on the orderer side is also stored. The information items can be used as extremely important information for the selling store to obtain statistical data such as salability of the merchandise.

If there is no merchandise in stock, stocking time or the like is informed to the user as response data. Alternatively, communication data indicating that the order cannot be accepted or taken up since there is no merchandise in stock is sent to the user (step D1).

If the merchandise is kept in stock, information that the order is accepted or taken up is sent to the orderer as response data (steps C6, C7, C8).

If the device on the order receiving side sends response data indicating that there is no merchandise in stock or the order cannot be accepted, the orderer can confirm to this effect by watching the order contents confirming window (step B14) of FIG. 7. By watching the window, the orderer can select canceling of the order or waiting for stocking of the merchandise. When waiting for the stocking of the merchandise is selected, order information is issued to the device of the selling store again together with the stocking waiting information. The device on the order receiving side which has received the stocking waiting information stores order-received merchandise data into a memory.

In the above system, transmission/reception data is order receiving information or ordering information associated with the merchandise, but the transmission side can input a simple memo from the keyboard, add the same to ordering information and send them. In this case, on the order receiving side, the memo is stored into another exclusive memory and the contents thereof can be confirmed by displaying the contents on the display.

In the above explanation, a case wherein a person or a general consumer orders the merchandise to the selling store is shown as an example. However, this is not limitative and, for example, transactions between the personal store and the store of the selling agency can be effected. A system explained below is an effective embodiment when the above-described merchandise data is applied.

In the above explanation, a process for determining whether the orderer pays by use of a credit card or electronic money or pays by the cash transfer to a bank or post office and a process effected when the payment is made by use of a credit card or electronic money are not explained.

However, this system has an information processing function effected when the orderer pays by use of a credit card or electronic money or pays by the cash transfer to a bank or post office. The orderer can input information on the payment method in the steps B7, B8 of FIG. 7.

Further, the order receiver checks the payment method before the step C7 of FIG. 9.

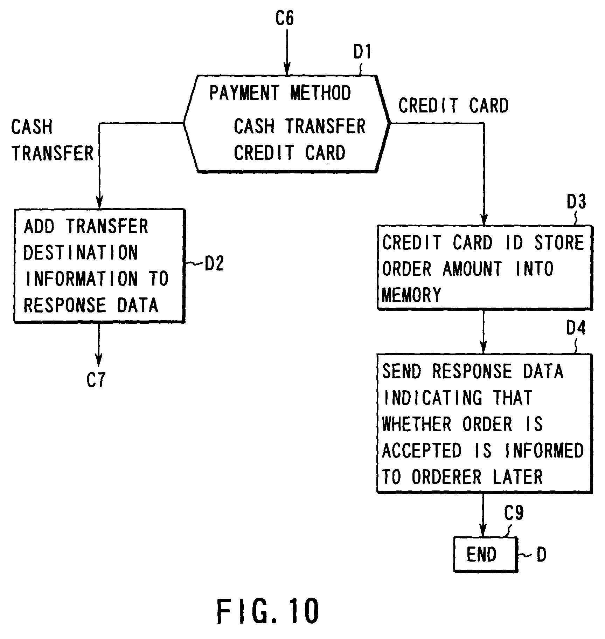

FIG. 10 shows a processing routine of payment method information.

First, whether or not the payment method sent from the orderer is a cash transfer method to a post office or bank is determined. If it is the cash transfer method, transferred destination information is added to response data and sent to the orderer (steps D1, D2). If the payment method is the credit card system, a credit card ID and information on the ordered amount sent from the orderer are stored into an orderer information memory (step D3). Then, a comment of "We will contact you by return as to whether or not the order is taken up" is sent back as the response data and the process is terminated (steps D4, D5).

As described above, in a case where the payment method is the credit card system, the order receiver will contact the orderer by return as to whether or not the order is taken up.

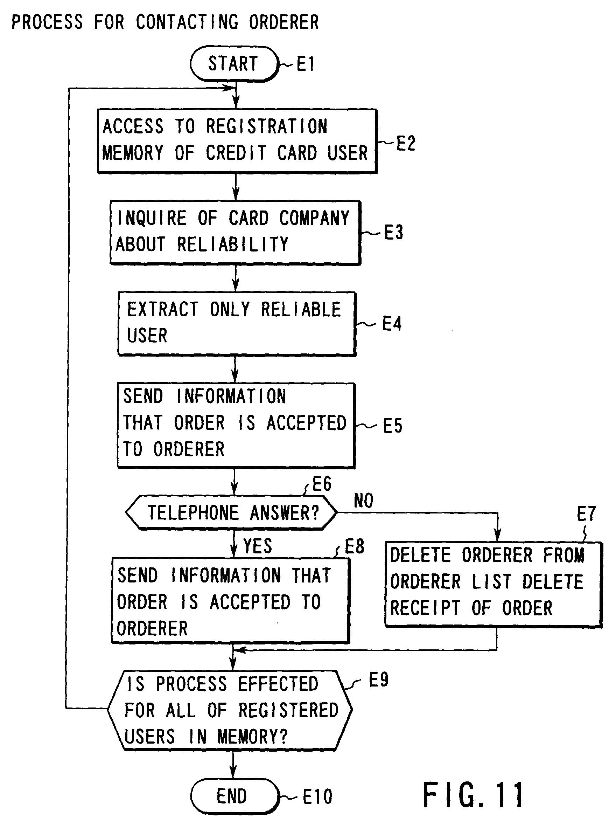

FIG. 11 is a flowchart for illustrating the data processing operation effected in the device on the order receiving side when response data is sent to the orderer side. First, data in the orderer information memory which is acquired in the step D3 is used (steps E1, E2). Data of the credit card user is stored in the memory.

The credit card ID, the telephone number of the orderer, ordered amount, merchandise code and the like are registered. In order to check the reliability of the owner of the credit card by use of information of the credit card ID, an inquiry is made to the card company. By this inquiry, user's reliability data stored in the card company is returned by use of the telephone line. Based on the user's reliability data, whether the user of the credit card can be trusted or not is determined. Thus, the reliability of each orderer stored in the orderer information memory is checked and data of only the user with high reliability is extracted (steps E3, E4). The order receiving information is sent to the user with high reliability via the telephone line. That is, information indicating that the order is accepted or taken up is sent back (step E5). In this case, whether or not an answer is obtained is determined when a telephone call is made to the orderer who places the order. If there is no answer to the telephone call, that is, if the telephone call cannot be successfully made, order information in the orderer information memory is deleted (step E7).

If it is determined in the step E6 that the answer to the telephone call is made, information indicating that the order is taken up is sent back as response data (step E8). Next, whether or not the determination process for taking up or refusing the order is terminated for all of the user data items in the orderer information memory is determined (step E9) and if the process is terminated for all of the user data items, the process is terminated (step E10).

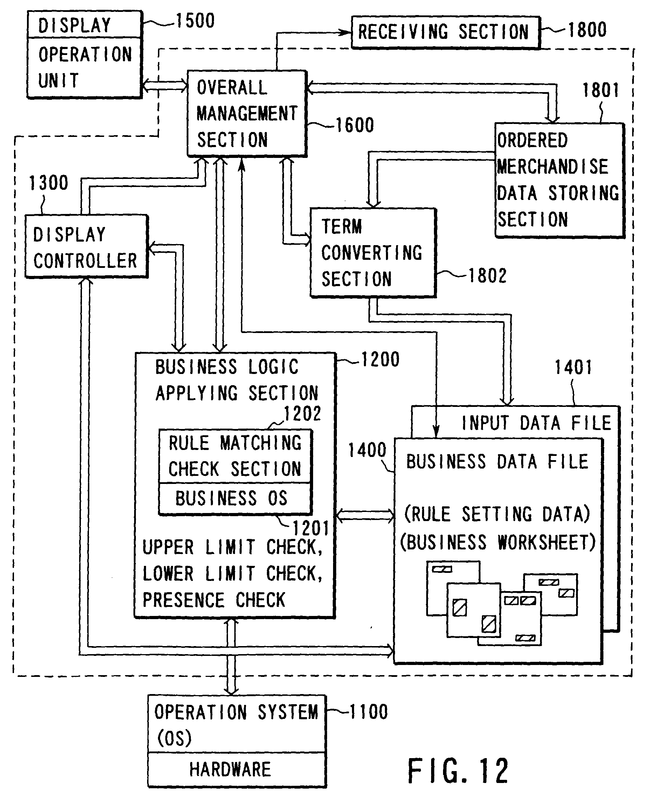

FIG. 12 shows a data processing function further provided in the personal computer shown in FIGS. 1 and 8.

A reference numeral 1100 denotes a computer main body which is constituted by hardware and operation system (OS). A reference numeral 1500 denotes a display section, a portion surrounded by broken lines is a new working device relating to this invention, and the portion is constituted by a recording medium and a drive device thereof or a logic block formed in an IC form. Of course, in the device, a hard disk and memory are also contained.

The computer main body 1100 is constituted by hardware and operation system (OS). A business logic applying section 1200 is mounted on the computer main body 1100. The business logic applying section 1200 is constituted by a business operation system (business OS) 1201 and a business rule matching/check section 1202.

The business operation system (business OS) is previously determined software such as presence check software, upper limit check software, lower limit check software and total amount check processing software. The above software programs are used as common software programs for various processing operations.

The business rule matching/check section 1202 serves as a determination section for determining which software is used when business operation system software is used based on the business logic terms of a business worksheet in a case where data processing is effected as will be described later.

The business worksheets, business logic terms and rule setting data are stored in a business data file 1400. The business data file 1400 stores various types of worksheets such as a register, slip and plan for rule setting required in business, and a slip, book and slip, ordering slip and settling slip used in distribution business. The worksheet includes at least one business logic term representing the meaning on business in the minimum unit.

A data input position is present in correspondence to the business logic term. When the worksheet of a plan or rule setting is used in designing a program and data is input to the data input position, the input data is used as rule setting data.

After the rule setting data is input and when data is input to a data input position of a worksheet such as a rule confirmation or estimate while the computer is used for business purposes, the input data is used as application data.

Newly input data is stored into an input data file 1401. The input data file 1401 is set to correspond to the business data file 1400 and has a data area corresponding to the business logic term of the worksheet. Data in the data area can be rewritten and the data area can be constituted by a rewritable memory or disk.

A reference numeral 1500 denotes a display which displays a worksheet when a program is created or when a program is used after the program is created. The display 1500 is used so as to permit the user to confirm the data input or the result of program processing. In creating and using a program, an overall management section 1600 is operated in response to an input operation from the operation unit to access peripheral block data or start the peripheral block and thus control data input/output timings.

In response to the operation input via the overall management section 1600, a display controller 1300 determines a specified one of the worksheets to be displayed and reads out the data from the business data file 1400. At this time, data accompanying to the readout worksheet is also read out. The readout data and worksheet are transmitted via the overall management section 1600 and displayed on the display 1500. As accompanying data, data in the input data file 1401 is also contained.

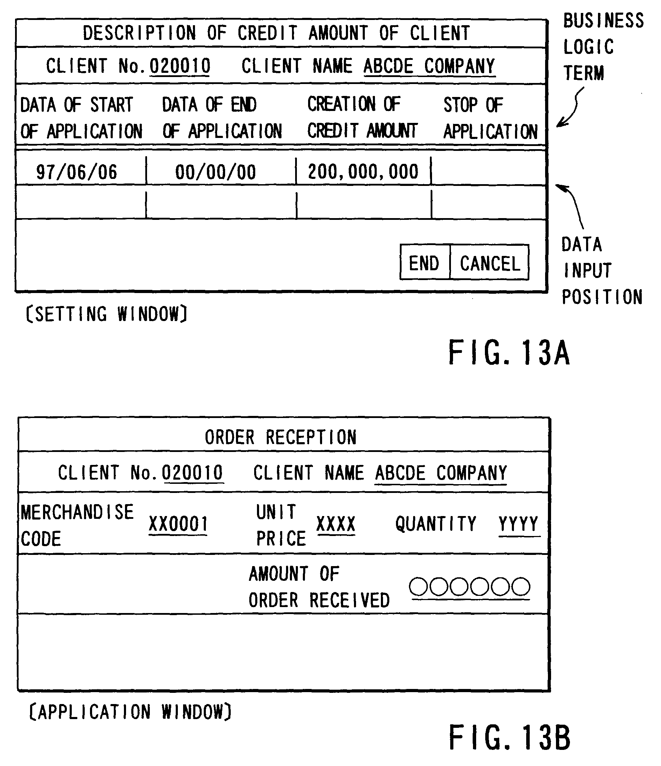

As shown in FIGS. 13A, 13B, for example, the business logic terms are described in the worksheet and data is described in blank portions (data input positions) corresponding to the business terms. In this example, a worksheet for setting a credit amount for a client is used. The title "Description of Credit Amount for Client" is set as the title. In order to read out the worksheet of this title, an operation called the starting operation of program creation (or business rule setting) is performed by use of an operation unit 1501 and, for example, if a menu is requested, a title menu corresponding to the request appears.

The user refers to the title menu and clicks the title "Description of Credit Amount for Client". Therefore, the worksheet is displayed on the display.

The overall management section 1600 activates the system and responds to an input from the operation unit 1501.

Since the data processing contents corresponding to the item "Description of Credit Amount for Client" are previously determined, the business logic applying section 1200 has data indicating the correlation between software for performing the data processing and the worksheet.

In the display state shown in FIG. 13A, the client number, company name and the like are input. The worksheet also has columns of the date of start of application, the date of end of application, the credit amount, and the stop of application and data items necessary for the columns are described in the respective columns. In this example, the date of start of application of 97/06/06 and the credit amount of 200,000,000 are described and no data is described in the columns of the date of end of application and the stop of application. In this system, whether or not data is described in each column and whether or not the data processing is effected according to the meaning of the business logic in each column are automatically determined. For example, since data is described in the column of the date of start of application, the check process for the date of start of application is effected. Further, since no data is described in the column of the stop of application, the determination process for determining whether the stop of application is effected or not is not performed. If data of stop is described in the column of the stop of application, the data process for each item is not performed from the beginning.

A worksheet for creating a sales merchandise list of a client is also stored in the business logic applying section 1200. Therefore, various types of data items of the client (the data items are referred to as business rule setting data items) can be created.

When the operation of describing necessary rule setting data items in the necessary worksheet is completed, the end of window display is clicked. Then, each worksheet is stored into the business data file 1400. Since the necessary data processing in a business operation is previously determined according to the type (contents) of rule setting data, a program to be applied to each data can be determined by inputting data as described above.

For example, when application data is input to check a client for the credit amount in the actual use of the computer on business, it is necessary to determine whether the application data is adequate or not. Therefore, the upper limit check process for comparing the previously input credit amount (business setting data) with the application data to determine whether or not the application data exceeds the value of the business rule setting data is performed.

In order to input the application data, an input worksheet (not shown) is present.

That is, in this apparatus, business application software is perfectly separated into business application software and program logic (computer logic) according to a predetermined reference, and the construction of the apparatus is considered. The predetermined reference can be determined by dealing with business worksheets (business documents) and items expressed in the worksheets as objects, and slips materials in the form of a computer window or computer book and slip are separately extracted.

Further, the business data items are classified into items of a business transaction know-how data group (meaningful minimum unit elements for determining the contents of a business contract), a basic business operation data group (meaningful minimum unit elements such as company rules for pursuing the contract), and an account data group (meaningful minimum unit elements such as accounting processing rules based on the commercial law, tax law, commercial transaction law) and the data groups are set to correspond to application software programs to process the data groups. That is, the data groups are set to correspond to the application software programs such as the upper limit check program, lower limit check program, presence check program, total amount processing program and the like.

By separating and arranging the data as described above, only the mechanism of the application software for processing the above items is left as the program logic and is used as the business OS. If the contents of the business items are known, the remaining portions of the business items are simple data. The data items are business data.

As a result, the software (business OS) stored in the business logic applying section 1200 is a software group for performing the upper limit check process, lower limit check process, presence check process and total amount processing by use of the application data (data input when the apparatus of this invention is used in the actual business transaction) and business rule setting data (previously stored as a data base) corresponding to the application data.

Referring back to FIGS. 13A-13B, the explanation is made. A data base using the worksheet as shown in FIG. 13A is created. In the above example, a case wherein the credit amount is set for a given client company is explained. In addition, a client company list data base, data base of sales merchandises for clients, data of unit prices and quantity information of the sales merchandises can also be created.

FIG. 13B shows an example of an application window indicating that an order from a client ABCD Co. is received. In this case, an application worksheet is read out as the worksheet and, as shown in FIGS. 13A, 13B, accessed information is input to a necessary position. That is, the client code, client name, merchandise code, unit price, quantity, amount of order received and the like are input. After the above data items are input, the operation start is instructed. The apparatus is switched to the application mode by the operation unit 1501 and the user requests the menu of the application window for the worksheet of the application window. As a result, the display controller 1300 displays the title of the application worksheet. When a desired title, that is, "receipt of order" in this case is present, the user clicks the title.

By this operation, the application window of FIG. 13B can be obtained on the display 1500. After this, the user inputs data. In this case, if the start of inquiry is operated, the operation for determining whether or not the amount of order received exceeds the credit amount (upper limit check process) is performed. At this time, the software is executed as follows. The business logic applying section 1200 recognizes the item of the amount of order received to automatically select the software for the upper limit check process and then executes the software. Data obtained as the result of the above process is displayed as "within the credit amount" or "over the credit amount" on the display 1500 via the display controller 1300 and overall management section 1600.

In the above apparatus, each block surrounded by the broken lines may be constructed by a logic circuit, but function data items of the overall management section 1600, term converting section 1802, display controller 1300, business logic applying section 1200, and business data file 1400 are previously recorded on the optical disk and the function data items are read out by the microcomputer to create the function blocks. An order data storing section 1801 and input data file 1401 may be securely acquired in part of the optical disk if the optical disk is of programmable type or may be created by a memory or hard disk previously provided in the microcomputer.

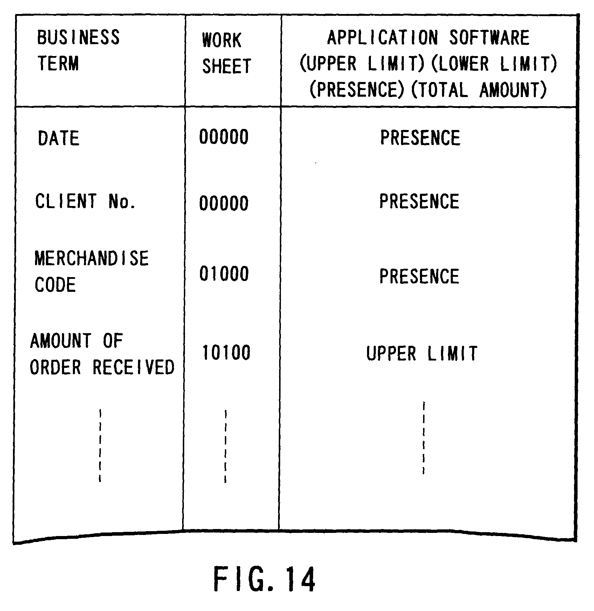

FIG. 14 shows a correlation table between the worksheets, business logic terms described in the worksheets, worksheet group data in which the business logic terms are present, and application software. By causing the business data file 1400 or business logic applying section 1200 to have the correlation table, it becomes possible to recognize the worksheet which is now accessed on the display 1500, recognize the corresponding business logic term when data is input, and determine the application software. Data obtained as the result of application of the software is fed back as a window on the display again.

The table of FIG. 14 may be described in the block of the business logic applying section 1200 or business data file 1400.

As described above, if the order is received, the credit amount is checked and the check process can be effected after the step C6 of the flowchart explained with reference to FIG. 9. The process becomes effective when a large amount of orders of merchandises are given from the client. If the credit amount is exceeded, a response indicating to this effect is sent to the orderer to make the transaction safe.

In the system, a function of checking the data form so as to permit fetched data as explained with reference to FIG. 9 to used in the apparatus shown in FIG. 12 is provided. That is, ordered merchandise data received in the receiving section 1800 is temporarily stored in the merchandise data storing section 1801 via the overall management section 1600 (refer to the step C7 in FIG. 9). Next, a window as shown in FIG. 13B is read out from the business data file 1400 of the system. Then, the user determines whether the describing manners of the client No., merchandise code, unit price and quantity are adequate or not and if they are adequate, the user drags to describe data of the items into respective items of corresponding business logic terms. If any one of them is inadequate, the user rewrites it into an adequate form and drags.

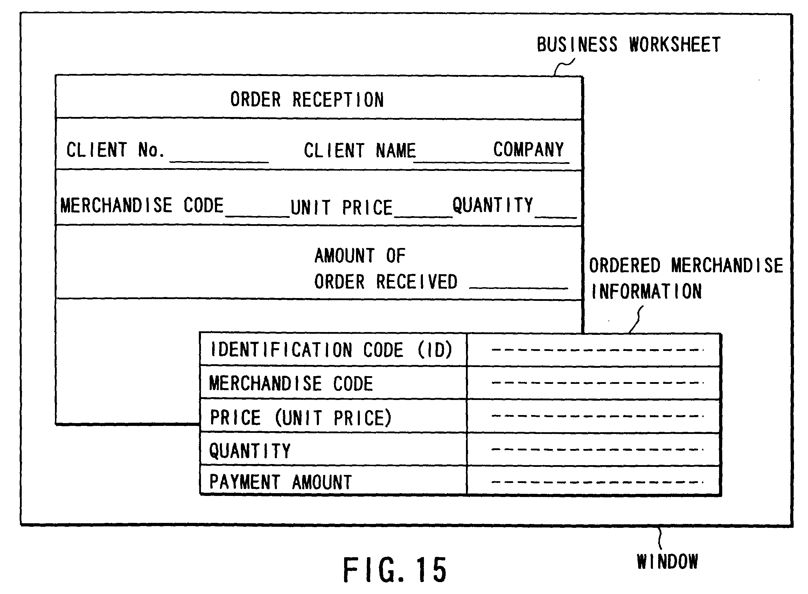

FIG. 15 shows a state in which a business data file to be applied is read out to the display 1500 and received ordered merchandise information is displayed in a superposed form.

The user (receiver of an order) determines whether the identification code of the orderer corresponds to the client No. or not, and if it does not correspond to the client No., the user describes data obtained by correcting the identification code into a blank portion of a preset item. Further, whether the merchandise code is set in an adequate format or not is determined, and if it is inadequate, it is rewritten into an adequate format and described into a blank portion of a preset item of the business worksheet.

Thus, the user of the above apparatus can use merchandise information of the recording medium as transaction data.

In the above explanation, information for transaction is transmitted via the telephone line and response information is received, but the circuit is not limited to this example, and it is of course possible to use the private line or the circuit of internet or ISDN.

Further, ordering and receipt of an order of the merchandise have been explained, but it is of course possible to contain guidance information of a sight-seeing resort appearing on the window or information of a method for reservation of a hotel or inn as the associated information.

As described above, according to this invention, a picture information applying method and apparatus for making it possible to use a recording medium for another application, and a recording medium used therefor can be provided.

The user who purchases a recording medium can not only see the film but also orders a wear or shoes which a person appearing on the film wears to the selling agency. Further, the selling store or the maker of the merchandise can give an advertisement and propaganda via the recording medium (optical disk) and get a chance leading to the actual merchandise sales. Further, by collecting sales data, reference materials used as salability information and used for determining the future sales plan can be obtained. In addition, a disk maker or film maker can collect funds for making the film by using a merchandise maker or selling agency as a sponsor.

This invention provides a picture information applying method and apparatus for causing a recording medium to be used for another application and a recording medium used therefor. For this purpose, picture data (102) is recorded on a recording medium (100) and associated information (P11) containing at least a to-be-connected destination and merchandise guidance for a merchandise appearing in a video image (P1) displayed based on the picture data is recorded, and when a recording signal of the recording medium is played back, the corresponding merchandise guidance can be observed based on the associated information and it is made possible to make contact with the destination associated with the corresponding merchandise based on the associated information.

## Claims

1. A picture information applying method characterized by comprising the steps of:
recording picture data (102) on a recording medium (100); and
recording associated information containing at least a to-be-connected destination and merchandise guidance for a merchandise appearing in a video image displayed based on the picture data (102);
wherein the corresponding merchandise guidance can be observed based on the associated information on a display device (300, 400) to make it possible to make contact with the destination when a recording signal of the recording medium is played back.

2. A recording medium (100) characterized by comprising:
an area in which picture data is recorded; and
an area in which associated information (103) containing at least destination information for a merchandise appearing in a picture displayed based on the picture data is recorded.

3. The recording medium according to claim 2, characterized in that the picture data is compression data obtained by compressing a moving picture, the associated information is displayed as a video image on part of a field picture (or a frame picture) when the compressed data is decoded, and the associated information includes first associated information (P11, P12) indicating that a merchandise displayed by the field picture (or frame picture) is an object to be guided and second associated information (p41, P42) searched for based on operation information input along the guide line shown by the first associated information and containing detail information of the merchandise.

4. The recording medium according to claim 3, characterized in that the first associated information is a signal previously superposed on the field picture (or frame picture) as part of the video image.

5. The recording medium according to claim 3, characterized in that the first associated information is data arranged and recorded separately from compression data obtained by compressing the moving picture and is a signal played back in synchronism with a corresponding field picture (or frame picture).

6. The recording medium according to claim 3, characterized in that the first or second associated information contains information of a telephone number of a selling agency of the merchandise.

7. The recording medium according to claim 3, characterized in that the second associated information contains information of a validity period in which the merchandise can be ordered.

8. The recording medium according to claim 3, characterized by further comprising an area in which software for transmitting merchandise information associated with a merchandise ordered based on the second associated information via a transmission line is recorded.

9. A picture information applying apparatus for playing back a recording medium on which recording picture data (102) is recorded and associated information (103) containing at least information of a to-be-connected destination for a merchandise appearing in a video image displayed based on the picture data, characterized by comprising:
means (A1, A2) for reading out the picture data of the recording medium and acquiring a first display signal for displaying a decoded video image thereof; and
associated information processing means (A4, A5, A6, A7) for acquiring a second display signal for displaying the destination information based on an operation input information and the associated information.

10. The picture information applying apparatus according to claim 9, characterized in that said associated information processing means displays information containing a merchandise code, price, validity period, presence or absence of an order necessary for ordering the merchandise together with the destination information.

11. The picture information applying apparatus according to claim 9, characterized in that said associated information processing means has a function of transmitting data associated with an ordered merchandise based on the destination information via a transmission line.
